# EUROPEAN PATENT APPLICATION

(11) **EP 2 009 617 A2**
(43) Date of publication of application: **31.12.2008**
(21) Application number: 08158488.0
(22) Date of filing: 18.06.2008
(51) Int. Cl.: G09F 21/04

(54) **Advertising system**

(30) Priority: 19.06.2007 SE 0701503
(71) Applicant: Resemino System AB, 175 47 Järfälla (SE)
(72) Inventor: ALDÉN, Kurt, 616 33, ÅBY (SE)
(74) Representative: Bokinge, Ole

(57) **Abstract**

An advertising system for advertising on a carrier, such as on the outside of a bus, comprises a sheet holder (3) for mounting on said carrier; and a sheet (1) for fitting in the sheet holder so that an advertising side (2) of the sheet is facing outwards relative to said carrier, the sheet having opposing sheet edge portions (11a, 11b), and the sheet holder (3) comprising opposing sheet-holding portions (9a, 9b), whereof at least one of said sheet-holding portions is provided with a longitudinal groove (5a, 5b) for receiving one of said sheet edge portions (11a, 11b). Said sheet edge portions (11a, 11b) are resilient in a spring-back direction which is parallel with the perpendicular of the advertising side (2) and, when said sheet edge portion (11a, 11b) is located outside the groove (5a, 5b), in said direction have a thickness (t') which is greater than a minimum width (w, w') of the groove (5a, 5b).

## Description

### Technical Field

The present invention relates to an advertising system for advertising on a carrier, such as on the outside of a bus, comprising a sheet holder for mounting on said carrier and a sheet for fitting in the sheet holder so that an advertising side of the sheet is facing outwards relative to the carrier.

### Background of the Invention

In advertising, for example in order to convey an advertising message, on the outside of a vehicle, for example on a long side of a bus, the surface area which is wished to be covered by the advertising message is often relatively large, for example within the range 1-15 m². When the advertising message is not printed or fastened directly onto a part of the vehicle itself, but rather onto a separate substrate which, in turn, is fastened to the vehicle, it is important that the substrate is properly fastened so that it does not come loose under the influence of wind and weather and/or under the effect of gravity upon the sheet. It is generally harder to attain good securement the larger the surface area of the substrate, since this generally implies a heavier substrate and means that the surface area which is susceptible to wind and weather is larger.

US 2004/0111938A1 shows a solution in which signboards of thick board are inserted from the side into a frame vertically mounted onto a side face of a truck. The signboards are inserted parallel with the side face in grooves formed between the mounting frame and the side face. The advertising message and marks for mounting fittings are applied to each panel with the aid of an ink-jet printer and the written surface is treated for water resistance purposes. The advertising-bearing signboards are placed edge to edge in the frame and form an advertising surface on the side face of the truck. To prevent the signboards from blowing out of the frame when the truck is moving, the signboards are fixed to the side face of the truck with the aid of mounting fittings, which are fastened through each signboard at the fastening marks.

A problem with the solution according to US 2004/0111938A1 is that the securement of the signboards is relatively awkward owing to the four mounting fittings which must be used to fix each signboard to the side face of the truck.

### Summary of the Invention

A general object of the present invention is to produce an, in the above respect, improved and/or alternative advertising system for use on vehicles. A more specific object is to produce an advertising system for use on vehicles which allows the sheet bearing the advertising message to be more easily attached to the side of the vehicle.

The invention is defined by the appended independent patent claim. Preferred embodiments emerge from the dependent patent claims, the following description and the drawings. The abovementioned and other objects and advantages also emerge from the following description.

According to a first aspect, an advertising system for advertising on a carrier, such as on the outside of a bus, is therefore produced, comprising a sheet holder for mounting on said carrier; and a sheet for fitting in the sheet holder so that an advertising side of the sheet is facing outwards relative to said carrier, the sheet having opposing sheet edge portions and the sheet holder comprising opposing sheet-holding portions, whereof at least one of said sheet-holding portions is provided with a longitudinal groove for receiving one of said sheet edge portions. Said sheet edge portions are resilient in a spring-back direction which is parallel with the perpendicular of the advertising side and, when said sheet edge portion is located outside the groove, in said direction has a thickness which is greater than a minimum width of the groove.

By "resilient in a direction which is parallel with the perpendicular of the advertising side" is meant that, if the sheet edge portion is flattened at right angles to the side carrying the advertising message, the sheet edge portion attempts to spring back in the opposite direction.

When the resilient sheet edge portion is placed in the groove, the sheet edge portion is compressed in the perpendicular direction of the advertising side and the spring-back towards opposite inner sides of the groove gives a clamping effect, whereby the sheet sits more securely in the sheet holder. Since the clamping effect occurs in the groove into which the sheet edge portion is inserted when placed in the sheet holder, the actual fastening of and also removal of the sheet is easier than if a special fastening step or fastening components is/are applied after the sheet has been placed in the holder. Since the clamping effect is achieved with the aid of the sheet, conventional sheet holders do not necessarily need to be modified, which also makes the solution cost-effective.

The sheet can substantially consist of paper and have a gram weight which is maximally 900 g/m², or maximally 800 g/m², or maximally 700 g/m², or maximally 600 g/m², or maximally 500 g/m².

The fact that the sheet sits more securely allows paper sheets to be used, which, per se, have relatively low flexural rigidity without them falling out of the holder. Lower flexural rigidity requirements allow the use of paper with lower gram weight, which, in turn, allows paper to be used at lower cost. Moreover, paper is an environmentally friendly alternative to, for example, plastics advertising sheets and allows recycling of the sheet after the advertising. When a flat conventional sheet without resilient edge portions has been placed in a conventional sheet holder, it has been shown that, if paper sheets are used, then these must have a gram weight of at least 1000 g/m² in order to give sufficient flexural rigidity.

By "substantially consist of paper" is meant that typically at least 90% of the weight of the sheet is constituted by paper. Typically, the sheet is deemed to substantially consist of paper even if it comprises print layers and/or protective layers which do not consist of paper. Compare, for example, with carboard packagings for drink, which often have a non-paper liquid-resistant layer and/or are chemically treated, but are nevertheless deemed to be paper-based and are recyclable like paper.

The minimum width of the groove can be greater than the thickness of the sheet. The sheet can be arranged so that the paper fibres in a machine direction (MD) are essentially vertically orientated when the sheet holder is mounted on said carrier and the sheet is in the sheet holder.

Since maximum stress typically occurs in the vertical direction due to the action of gravity and the vertical orientation of the paper fibres increases the strength and the flexural rigidity in the vertical direction, this orientation of the fibres allows the system, even if paper with relatively low gram weight is used, to be better equipped to cope with tough conditions and tensions in the vertical direction without being destroyed, bent, folded and, hence, without coming loose from the sheet holder.

Said sheet edge portion can comprise a bending, such as a folding, of an outer part, in over the surface of the sheet, so that said sheet edge portion, in said spring-back direction, has double layers of the sheet.

A bending of this kind is typically resilient, for example folding of a paper edge gives a resilient effect. The bending allows the use of flat sheets which, following production and even following printing/print-out of an advertising message, are modified, for example by folding of edge portion(s), and also allows compatibility with conventional sheet holders, for example by ensuring that the sheet with bending of edge portion(s) has an advertising side with surface area corresponding to the measurements of conventional sheets intended for the conventional sheet holder.

The bending of the outer part can be in over the advertising side of the sheet.

Bending in this direction enables the bent part to spring back against the inner side of the groove in the direction out from the carrier, whereby the remaining part of the sheet is pressed in the direction of the carrier. The sheet therefore makes better bearing contact against the carrier side, which reduces the risk of air pockets between sheet and carrier. Exposure to and the effect of wind and weather is also reduced compared to if the sheet were instead, for example, to bow outwards.

The maximum width of the bending in the plane of the advertising side can be at least approximately 2 times or at least approximately 3 times greater than the width of said groove.

Said groove can comprise a locking element, which is arranged to give the groove partially, in the depth direction of the groove at a distance from the bottom of the groove, a smaller width.

This makes it possible to receive the bent sheet edge portion in the groove, so that the bending lockingly engages with the locking element when the sheet edge portion is displaced in the direction of the opposing sheet-holding portion. The bending therefore acts as a locking element of the sheet. As a result of the locking engagement, the scope of displacement of the sheet is limited and the sheet edge portion in question is held in place in the groove. Without the locking, a sheet without sufficient flexural rigidity could, for example, be bent, folded or otherwise deformed due to gravitational forces and possibly other external force action, for example wind, in the direction out from the advertising side, whereupon the sheet edge portion would slide out of the groove and the sheet would come loose from the sheet holder. Since the bent part is resilient and thus adjusts to the space which is formed between the groove bottom and the locking element, the requirements of relative tolerances for the achievement of the locking are relatively small.

The sheet can comprise corrugations which extend between said opposing sheet edge portions.

Apart from the fact that they lend resilience to said sheet edge portions, the corrugations improve the flexural rigidity of the sheet and the effect is that the requirements of flexural rigidity for the sheet material per se are reduced, which, in turn, allows the possiblity of using thinner and thus cheaper sheets.

The corrugations can have an amplitude span within the range 4-100 mm. A distance between adjacent corrugations can be from about 2 to about 5, typically approximately 3, times or more greater than the amplitude span of the corrugations.

By "amplitude span" is meant a distance between the highest peak and the lowest trough of the corrugations.

Corrugations having these amplitude spans and corrugations with at least these distances between adjacent corrugations have been found to give a good balance between low visibility of the corrugations when viewing the advertising side of the sheet, resilience in the sheet edge portion, compatibility with conventional sheet holders and increased flexural rigidity of the sheet.

The amplitude span of the corrugations can be at least about 3 times greater than the minimum width of the groove.

According to a second aspect, a sheet is produced for use as the sheet in the advertising system.

According to a third aspect, a sheet holder is produced for use as the sheet holder in the advertising system.

### Brief Description of the Drawings

The advertising system will now be described in greater detail with reference to the accompanying schematic drawings.

Fig 1a is a side view of a bus on whose side an advertising system comprising a sheet holder with advertising sheet, according to a first embodiment, has been disposed.

Fig 1b is a plan view showing in greater detail the advertising system according to the first embodiment.

Fig 1c is a vertical cross section, marked in Fig 1b, of the advertising system according to the first embodiment.

Fig 1d is a vertical cross section, corresponding to that in Fig 1c, of just the advertising sheet, when this is located outside the sheet holder.

Fig 1e is a vertical cross section, corresponding to that in Fig 1c, in which just the sheet holder is shown.

Fig 2a is a side view of a bus on whose side an advertising system comprising a sheet holder with advertising sheet, according to a second embodiment, has been disposed.

Fig 2b is a plan view showing in greater detail the advertising system according to the second embodiment.

Fig 2c is a vertical cross section, marked in Fig 2b, of the advertising system according to the second embodiment.

Fig 2d is a horizontal cross section, marked in Fig 2b, of the advertising system according to the second embodiment.

Fig 2e is a horizontal cross section, corresponding to that in Fig 2d, of just the advertising sheet, when this is located outside the sheet holder.

Fig 3a-3b are respectively a horizontal cross section of an advertising sheet having an alternative type of corrugation than is found in the advertising sheet in the second embodiment.

### Detailed Description

A first embodiment of the advertising system will now be described.

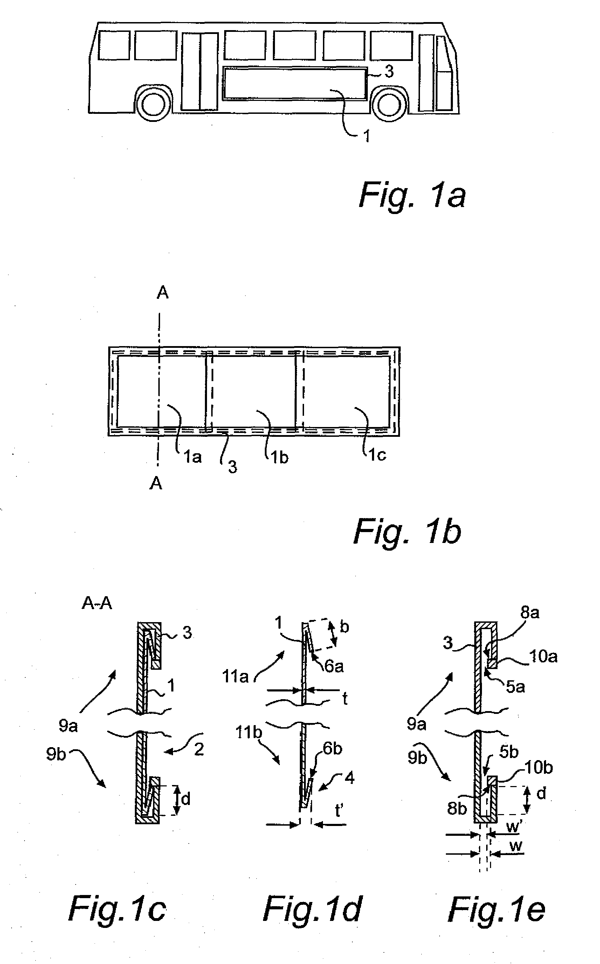

Fig 1a is a side view of a bus on whose side an advertising system comprising a sheet holder 3 and an advertising sheet 1 according to the first embodiment has been disposed. The sheet holder 3 is here in the form of a frame structure, which is attached to the outside of the bus. The sheet holder is typically made of metal, such as aluminium, though it will be appreciated that several other known materials are possible, likewise that the sheet holder can be fastened in a number of different known ways, for example by screwing, gluing, taping, etc. It will also be appreciated that the fastening and use of the advertising system on vehicles or carriers other than a bus may be considered. That side of the advertising sheet which faces outwards relative to the bus is provided with an advertising message.

Fig 1b is a plan view showing the advertising system according to the first embodiment in greater detail. In Fig 1b, a total advertising surface is formed by three sheets 1a-c disposed in the sheet holder. The sheets 1a-c are arranged in the sheet holder 3 with a certain overlap between adjacent sheets. Such overlapping is advantageously realized such that the outside edge is facing away from the wind direction, for example in the rearward direction of a vehicle to prevent the slipstream from taking hold of the sheet. Another possibility is, however, to place the sheets 1a-c edge to edge or with an interspace between adjacent sheets. Even though the sheet holder is here used together with a plurality of sheets containing an advertising message, the sheet holder can also be used with just one, or a different number of sheets. Typically, the sheet holder and sheet(s) incorporated in the system are matched to one another in size, so that the whole of the sheet holder is utilized in the advertising.

Sheet holders in this type of advertising system and similar conventional systems are typically designed to hold relatively large sheets, such as in the order of magnitude of 1x1 m² or larger, for example sheets having an advertising side measuring about 1.8 x 1.4 m², which is a size that is deemed suitable for advertising on buses.

The sheets 1 are prevented from tipping or falling out of the sheet holder by the fact that the outer edges of the sheet holder are provided with an internal groove which receives edge portions of the sheets. The placement of the sheets in the grooves can be gleaned from the outer dashed lines in Fig 1b. Even though the sheet holder is typically in the form of a frame structure with grooves running along the inside of all the edges, this is not necessary. For example, the sheet holder can alternatively be arranged with grooves partially and/or only along the top and bottom edges for the reception of corresponding upper and lower edge portions of the sheets. Where the sheet holder is not provided with grooves, it can support or hold a sheet in place in some other way.

Fig 1c is a vertical cross section A-A, marked in Fig 1b, of the advertising system according to the first embodiment when a sheet 1 is placed in the sheet holder 3, Fig 1d is a corresponding cross section of just the sheet 1 when this is located outside the sheet holder 3, and Fig 1e is the cross section A-A with just the sheet holder 3 shown.

In the first embodiment, the sheet holder 3 has upper and lower sheet-holding portions 9a, 9b with respective longitudinal grooves 5a, 5b having a first groove width w. The grooves 5a, 5b comprise locking elements 10a, 10b. The respective locking element 10a, 10b extends from an inner side of the corresponding groove 5 in the direction of the opposite inner side, so that the groove 5 by the locking element 10 has a smaller, second groove width w', that is to say w>w'. In the first embodiment, the respective locking element 10a, 10b extends from that inner side of the corresponding groove 5a, 5b which is farthest away from that side of the sheet holder 3 which is arranged to be fastened to the carrier, but can in other embodiments extend from the opposing inner side.

By starting off from a sheet holder with grooves but without locking element, the locking element can be formed by fastening to the groove a longitudinal strip, for example by providing one of the two opposing inner sides, at least partially, with such a strip. It will be appreciated that such a strip can be fastened in a number of different known ways, for example glued, taped, screwed, etc.

That part of the respective locking element 10a, 10b which is closest to the bottom of the corresponding groove 5a, 5b is at a distance d from the bottom of the groove. The respective locking element 10a, 10b therefore has a locking surface 8a, 8b at a distance d from the bottom of the corresponding groove 5a, 5b. Between the bottom of the respective groove 5a, 5b and the corresponding locking surface 8a, 8b, a space having the larger, first groove width w is thus formed.

In the first embodiment, the respective opposing edge portions 11a, 11b of the sheet 1 comprise a bending of an outer part 4, in over the surface of the sheet 1 on the advertising side 2. The bending is here in the form of a folding and can be achieved, for example, by folding the outer part of the edge portion of a flat sheet, for example after printing/print-out and/or any other treatment of the sheet 1 has first been realized. The bending is preferably resilient, which is the case, for example, when an outer part of a paper sheet is folded. When the sheet 1 is not in the sheet holder 3, the bending springs back maximally and the sheet edge portion 11 thus has a thickness t' in the perpendicular direction of the advertising side 2, which thickness t' at least is greater than the minimum width of the groove 5, here the smaller, second width w' by the locking element 10, that is to say t'>w'. Advantageously, also t'>w, that is to say the thickness t' of the sheet edge portion is advantageously, but not necessarily, also greater than the larger, first width w of the groove 5.

The thickness t' should not be confused with the thickness t of the sheet 1 itself. The thickness t of the sheet 1 is typically given by the gram weight of the paper which is used. Typically but not necessarily, the smaller, second width by the locking element is greater than the thickness t of the sheet itself, that is to say w'>t.

When a sheet edge portion 11 is received in a corresponding groove 5 and the resilient part of the sheet edge portion 11, such as the bending, is located inside the groove 5, in the space having the larger, first groove width w, the thickness t' of the sheet edge portion, as a result of the spring-back, is therefore at least greater than the smaller width w' of the groove (by the locking element), and a locking effect parallel with the surface of the sheet is obtained. When such a locked sheet edge portion 11 is displaced, or is attempted to be displaced, out from the groove 5 in the direction in towards the longitudinal opening of the groove, the locking surface 8 of the corresponding locking element 10a, 10b engages with the bending. In the shown example, the engagement is realized with an edge surface 6 of the sheet 1, which edge surface is outermost on that part 4 of the edge portion 11 which has been folded in. The edge surface 6 therefore acts as a locking surface of the sheet 1.

In other embodiments, the sheet can have a locking surface other than a sheet edge surface, for example a surface which is part of a pleating.

When also t'>w, the sheet edge portion 10 inside the groove therefore attempts to spring back more than is allowed by the first groove width w, and the sheet edge portion presses on opposing inner sides of the groove 5. This in itself produces a clamping and thus retaining effect upon the sheet edge portion.

In another embodiment, bending or folding on a sheet edge portion can be part of a pleating in which, for example, a first bending in over the inner surface of the sheet, for example in over the advertising side, is accompanied by a second bending back in the opposite direction, that is to say bending away from the inner surface of the sheet. This can be achieved, for example, by a double folding, or pleating, of the outer edges of a flat sheet. This type of pleating, or "multiple bending", typically gives a greater resilient force in the perpendicular direction of the advertising side.

In one embodiment, the maximum width of the bending, in the shown example the width b of that outer part 4 of the edge portion 11 which has been folded in over the advertising side 2, is approximately 3 times greater than the larger, first width w of the groove 5. The maximum width b of the bending can be at least about 2 times of the width w of the groove, but is typically within the range from about 2 times to about 4 times the width w of the groove.

It will be appreciated that the groove depth d can affect the width b which the bending should or can have. In the case of, for example, a bending as in the shown example, the width b of the folded part should typically be less than the diagonal of the space which is formed in the groove between the locking element 10 and the groove bottom, that is to say b² < d²+w².

In one embodiment, the width b of the folding, the groove depth d and the first groove width W are matched to one another, so that the maximum spring-back angle, relatively to the fully folded-down state, of the folding which is allowed in the groove is less than 45°. The groove depth d is typically in the order of magnitude of the width b of the folding, whilst the groove width w is typically much smaller, i.e. typically w<<b, w<<d. From this follows that the maximum spring-back angle is also typically much less than 45°, for example less than 15°. A lower maximally permitted spring-back angle typically produces a better locking upon engagement between the locking surfaces 6, 8.

The distance between the locking surfaces 8a, 8b on opposing sheet-holding portions 9a, 9b can be substantially equal to or less than the minimum distance between the bending of opposing sheet edge portions 9a, 9b in the compressed (non-sprung-back) state. That is to say, in the shown example, equal to or less than the distance between the edge surface of opposing sheet edge portions 6a, 6b (the locking surface of the sheet edge portion) when fully folded down against the sheet.

A substantially equal distance typically produces a tautening tension between the sheet edge portions 11 when the sheet 1 is in the sheet holder 3, which can make the sheet 1 sit better in place. An equal distance is obtained when b=d.

In an example according to the first embodiment, the sheet 1 is based on a paper sheet having a gram weight of fully 300 g/m², on which has been laminated a print layer of paper having a gram weight of approximately 70 g/m². A print-out of an advertising message has been realized on the print sheet. The side with the print sheet therefore forms the advertising side 2, which is subsequently treated for weather resistance purposes. The resulting sheet 1, which substantially consists of paper, has a gram weight which is less than 400 g/m² and a thickness t which is approximately 0.5 mm. A width b, which is approximately 30 mm, of the outermost part of the sheet edge portions 11a, 11b has then been folded at the upper and lower edge (in relation to how the sheet is intended to sit in the sheet holder when this is mounted on the carrier) in over the advertising side 2. After the folding, the sheet 1 has a surface area which is approximately 1.8 x 1.4 m². The sheet holder intended to hold this sheet has in corresponding upper and lower portions 9a, 9b grooves 5a, 5b having a larger, first width w measuring 4 mm, and a smaller, second width w' (by the locking element) measuring 2 mm. The groove depth d is 30 mm.

A second embodiment of the advertising system will now be described. In order to avoid repeated repetitions, this description will primarily focus on differences vis-à-vis the first embodiment. Much of what has been described in connection with the first embodiment holds true for and is also applicable to the second embodiment. In general terms, that which has an equivalent in the first embodiment but is not included in connection with the second embodiment and which, for reasons of logic or technical expertise, cannot be omitted, may be deemed to apply also to the second embodiment.

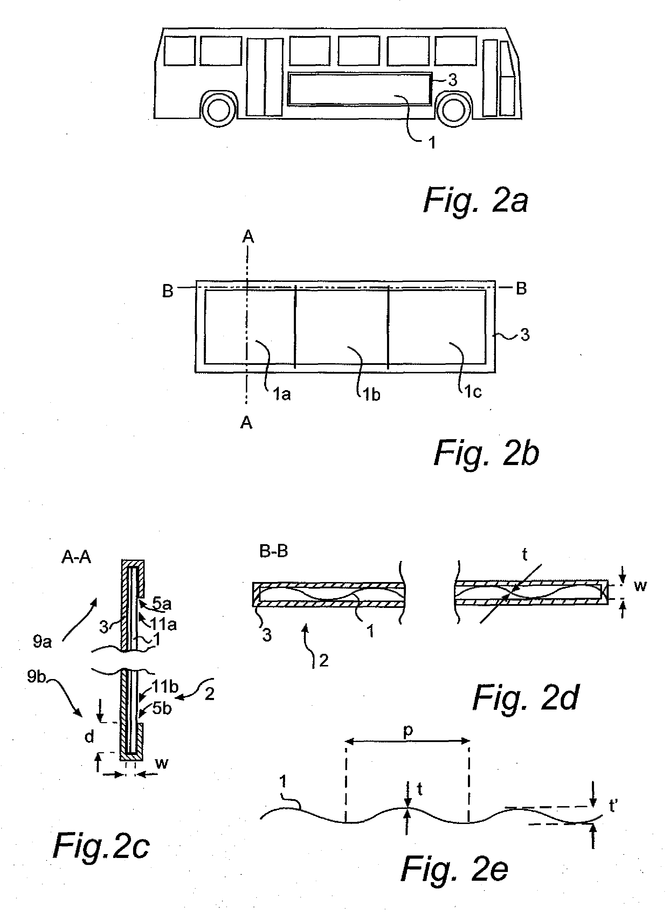

Fig 2a-b correspond to Fig 1a-b as described above.

Fig 2c-d are a vertical and horizontal cross section respectively, marked in Fig 2b, of an advertising system according to the second embodiment.

Fig 2e is a horizontal cross section of a sheet 1 in the advertising system according to the second embodiment, when the sheet 1 is located outside the sheet holder 3.

In the second embodiment, resilient sheet edge portions 11a, 11b are obtained as a result of the sheet having been provided with corrugations. As in the first embodiment, the sheet holder 3 has upper and lower sheet-holding portions 9a, 9b with respective longitudinal grooves 5 having a groove width w, here having the same width over the whole of the groove depth d since there is no locking element.

The corrugations are here sinusoidal and can be attained, for example, by hot-pressing the sheet 1 in a press with sinusoidal pressing surfaces, for example after printing/print-out and/or any other treatment of the sheet 1 has first been accomplished. The corrugations are preferably resilient, which is the case, for example, when paper sheets are hot-pressed. When the sheet 1 is not in the sheet holder 3, the corrugations spring back maximally and the sheet, inclusive of the sheet edge portions 11a, 11b, thus has a thickness t' in the perpendicular direction of the advertising side 2, which thickness t' is greater than the width w of the groove. When a sheet edge portion 11a, 11b is received in a groove 5 and the corrugations are located inside the groove, the corrugations spring back and therefore press on opposing inner sides of the groove. This has a clamping and thus retaining effect upon the sheet edge portion 11 in the groove 5, and hence also upon the sheet 1 in the sheet holder 3. The clamping also means that the sheet makes better bearing contact against the carrier side without, for example, vibrating and hence causing noise.

The corrugations also increase the flexural rigidity of the sheet in the direction in which the corrugations extend. This, too, contributes to the retaining effect of the sheet 1 in the sheet holder 3.

For a good clamping effect, it is typically desirable that the amplitude span t' of the corrugations is at least approximately 3 times greater than the width w of the groove. Typical corrugations have an amplitude span within the range 2-100 mm. The corrugations are here evenly distributed along the entire width of the sheet 1 and without flat portions between adjacent corrugations, but in other embodiments can be unevenly distributed and/or have flat portions between corrugations. A distance p between adjacent corrugations in the sprung-back state, here corresponding to the wave length of the sinusoidal corrugations, is typically from about 2 to about 5 times or more greater than the amplitude span t' of the corrugations. In an example according to the second embodiment, the sheet is first prepared in much the same way as in the corresponding example according to the first embodiment. The resulting sheet 1 is subsequently hot-pressed so that sinusoidal corrugations are formed evenly distributed along the entire width of the sheet. The corrugations have an amplitude span t' of about 6 cm and a wave length of about 12 cm. The sheet holder 3 has grooves 5a, 5b having a width w measuring about 4 mm and a depth d measuring about 3 cm.

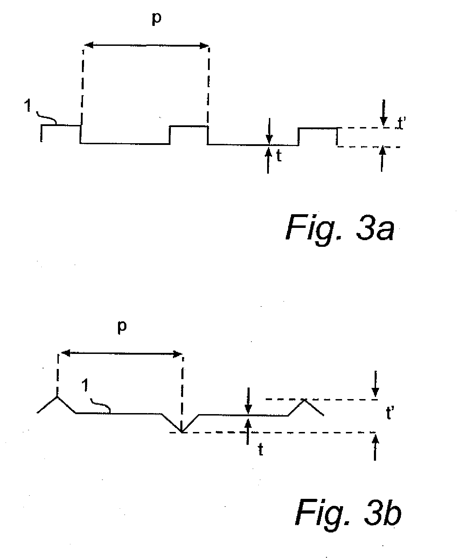

Fig 3a-3b are respectively a horizontal cross section of a sheet 1 having an alternative type of corrugation from that of the sheet in the second embodiment. The corrugations can be of different size and appearance and not only sinusoidally wave-shaped. For example, the corrugations can be substantially rectangular, as is shown in Fig 3a, or triangular, as is shown in Fig 3b. The corrugations can also bulge out on one (see Fig 3a) or both (see Fig 3b) sides of the sheet 1. When edge portions are overlapped, corrugations can also be used to lock overlapping portions together and/or in order to make it easier to match up the pattern between adjacent sheets.

In both the first and the second embodiment, the sheet 1, following possible deformation, such as bending or corrugation, and when it is placed in the sheet holder, can have a surface area corresponding to the surface area of conventional, flat advertising sheets. It will be appreciated that this typically means that, for example, the paper sheet(s) on which the sheet 1 is based should be sized somewhat larger than the conventional advertising sheets. The possibility of using sheets of lower gram weight amply compensates, however, for any extra cost to which larger sized sheets may lead.

In both the first and second embodiment, a sheet 1 is advantageously placed in the sheet holder 3 by being inserted from the side via an edge of the sheet holder 3, that is to say typically in the horizontal direction when the sheet holder sits mounted on the carrier. For example, the sheet holder 3 can be provided with a detachable side strip for this purpose.

In both the first and second embodiment, when paper sheets are used, the sheet 1 and the sheet holder 3 are advantageously designed so that the paper fibres in the machine direction (MD) are substantially vertically orientated when the sheet holder is mounted on a carrier.

Even though the present invention has been shown and described in drawings, embodiments and examples, this is merely illustrative and exemplary, but nonlimiting. It will therefore be appreciated that there are variants of advertising systems which, in varying degrees, differ from what has been described above, but which nevertheless are in accordance with the invention and within that which is defined by the patent claims, for example:
where the sheet, additionally, is provided with corrugations and one or more sheet edge portions with bending,
where also, or only, one or both horizontally opposing sheet edge portions is/are provided with bending, for example in the form of folding, and/or one or both corresponding grooves of the sheet holder is/are provided with locking elements,
where only one of opposing edge portions of the sheet holder is provided with a groove, whilst the opposing edge portion is arranged to hold the sheet in some other manner,
where one or more sheet edge portions has/have been made resilient in a manner other than by bending, folding or corrugation,
where only one of opposing sheet edge portions has been made resilient and/or has a thickness which is greater than the width of the corresponding groove,
where the sheet holder comprises distributed parts which form the sheet holder once these parts are mounted on the carrier,
where parts of the carrier form part of the sheet holder, for example the grooves of the sheet holder can be formed between the carrier and a sheet holder part mounted on the outer side of the carrier, for example a longitudinal strip,
where opposing sheet-holding portions of the sheet holder and/or opposing sheet edge portions, instead of being substantially identically configured, have more or less different configuration, etc.

Other variants and embodiments will become apparent to the person skilled in the art following familiarization with and study of the drawings, the description and what has been additionally described in this document.

Reference symbols in the claims should not be regarded as limiting, but are merely exemplary.

## Claims

1. An advertising system for advertising on a carrier, such as on the outside of a bus, comprising:
a sheet holder (3) for mounting on said carrier; and
a sheet (1) for fitting in the sheet holder so that an advertising side (2) of the sheet is facing outwards relative to said carrier, the sheet having opposing sheet edge portions (11a, 11b), and
the sheet holder (3) comprising opposing sheet-holding portions (9a, 9b), whereof at least one of said sheet-holding portions is provided with a longitudinal groove (5a, 5b) for receiving one of said sheet edge portions (11a, 11b),
**characterized in that** said sheet edge portions (11a, 11b) are resilient in a spring-back direction which is parallel with the perpendicular of the advertising side (2) and, when said sheet edge portion (11a, 11b) is located outside the groove (5a, 5b), in said direction has a thickness (t') which is greater than a minimum width (w, w') of the groove (5a, 5b).

2. The advertising system according to claim 1, wherein the sheet (1) substantially consists of paper and has a gram weight which is maximally 900 g/m², or maximally 800 g/m², or maximally 700 g/m², or maximally 600 g/m², or maximally 500 g/m².

3. The advertising system according to any one of claims 1-2, wherein the minimum width (w') of the groove is greater than the thickness (t) of the sheet.

4. The advertising system according to any one of claims 1-3, wherein the sheet (1) is arranged so that the paper fibres in a machine direction (MD) are substantially vertically orientated when the sheet holder (3) is mounted on said carrier and the sheet is in the sheet holder.

5. The advertising system according to any one of claims 1-4, wherein said sheet edge portion (11a, 11b) comprises a bending, such as a folding, of an outer part, in over the surface of the sheet, so that said sheet edge portion (11a, 11b), in said spring-back direction, has double layers of the sheet (1).

6. The advertising system according to claim 5, wherein the bending of the outer part is in over the advertising side (2) of the sheet (1).

7. The advertising system according to any one of claims 5-6, wherein the maximum width (b) of the bending in the plane of the advertising side is at least approximately 2 times or at least approximately 3 times greater than the width (w) of said groove (5).

8. The advertising system according to any one of claims 5-7, wherein said groove (5) comprises a locking element (10), which is arranged to give the groove partially, in the depth direction of the groove at a distance (d) from the bottom of the groove, a smaller width (w').

9. The advertising system according to any one of claims 1-8, wherein the sheet comprises corrugations which extend between said opposing sheet edge portions (11a, 11b).

10. The advertising system according to claim 9, wherein the corrugations have an amplitude span within the range 4-100 mm.

11. The advertising system according to any one of claims 9-10, wherein a distance (p) between adjacent corrugations is from about 2 to about 5, typically approximately 3, times or more greater than the amplitude span (t') of the corrugations.

12. The advertising system according to any one of claims 9-11, wherein the amplitude span (t') of the corrugations is at least about 3 times greater than the minimum width (w, w') of the groove.

13. A sheet for use as the sheet (1) in the advertising system according to any one of claims 1-12.

14. A sheet holder for use as the sheet holder (3) in the advertising system according to any one of claims 1-12.
